# EUROPEAN PATENT APPLICATION

(11) **EP 2 610 055 A1**
(43) Date of publication of application: **03.07.2013**
(21) Application number: 12166754.7
(22) Date of filing: 04.05.2012
(51) Int. Cl.: B32B 7/12, B32B 27/08, B44C 3/02, C08J 5/18

(54) **Plastic composite and method for manufacturing same**

(30) Priority: 30.12.2011 CN 201110453241
(71) Applicant: Shenzhen Futaihong Precision Industry Co., Ltd., Shenzhen City, Guangdong Province 518109 (CN); FIH (Hong Kong) Limited, Cheung Sha Wan Kowloon, Hong Kong (CN)
(72) Inventor: Zou, Zhi-Qing, Shenzhen City, Guangdong Province (CN); Zhou, Shu-Xiang, Shenzhen City, Guangdong Province (CN); Lin, He-Xian, Shenzhen City, Guangdong Province (CN); Ho, Po-Feng, Tu-Cheng New Taipei (TW)
(74) Representative: Gray, John James

(57) **Abstract**

A plastic composite comprises a first plastic substrate, an adhesive layer formed on the first plastic substrate, and a second plastic substrate formed on the adhesive layer. The first plastic substrate is made of thermoplastic resin material. The second plastic substrate is made of thermosetting resin material. The adhesive layer mainly comprises amino silane coupling agent. A method for manufacturing the plastic composites is also provided.

## Description

### BackGround

### Field

The exemplary disclosure generally relates to plastic composites and a method for manufacturing the plastic composites.

### BackGround

Plastic composites with insert are formed by the following steps: a first plastic substrate is provided, an insert is positioned/formed on the first plastic substrate to form a first plastic piece; the first plastic piece is positioned in a molding tool, and a melted thermoplastic resin material is introduced into the molding tool at high temperature and high pressure; when the thermoplastic resin material solidifies, the thermoplastic resin material forms a transparent second plastic substrate on the first plastic substrate. The second plastic substrate can prevent the insert from abrasion. However, during the high temperature and high pressure injecting process, high scouring forces can damage the insert and increase the internal stress between the first plastic substrate and the second plastic substrate.

Therefore, there is room for improvement within the art.

### Summary

According to one aspect of the disclosure, a plastic composite is provided. A plastic composite comprises a first plastic substrate, an adhesive layer formed on the first plastic substrate, and a second plastic substrate formed on the adhesive layer. The first plastic substrate is made of thermoplastic resin material. The second plastic substrate is made of thermosetting resin material. The adhesive layer mainly comprises amino silane coupling agent.

According to another aspect of the disclosure, a method for manufacturing the plastic composites is provided. The method includes: providing a first plastic substrate, the first plastic substrate is made of thermoplastic resin material; providing an adhesive agent, the adhesive agent mainly comprises amino silane coupling agent and deionized water; spraying the adhesive agent on the first plastic substrate and baking the adhesive agent to form an adhesive layer on the first plastic substrate; forming a second plastic substrate on the adhesive layer at an atmospheric pressure by injection molding, the second plastic substrate is made of thermosetting resin material.

### BRIEF DESCRIPTION OF THE DRAWINGS

Many aspects of the embodiments can be better understood with reference to the following drawings. The components in the drawings are not necessarily drawn to scale, the emphasis instead being placed upon clearly illustrating the principles of the exemplary plastic composite and method for manufacturing the plastic composite. Moreover, in the drawings like reference numerals designate corresponding parts throughout the several views. Wherever possible, the same reference numbers are used throughout the drawings to refer to the same or like elements of an embodiment.

FIG. 1 is a cross-sectional view of a first exemplary embodiment of a plastic composite.

FIG. 2 is a perspective view of a second exemplary embodiment of a plastic composite 100a.

FIG. 3 is a cross-sectional view of the plastic composite of FIG. 2 taken along line III-III.

FIG. 4 is a cross-sectional view of a third exemplary embodiment of a plastic composite 100b.

### DETAILED DESCRIPTION

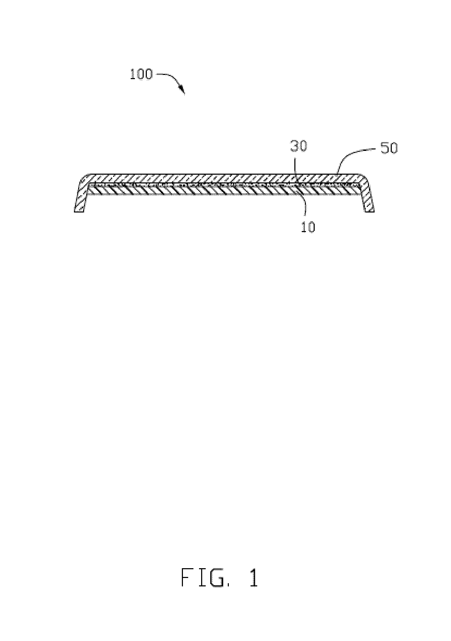

FIG. 1 shows a first exemplary embodiment of a plastic composite. The plastic composite 100 comprises a first plastic substrate 10, an adhesive layer 30, and a second plastic substrate 50 formed on the first plastic substrate 10, and in that order.

The first plastic substrate 10 can be made of thermoplastic resin material selected from a group consisting of polycarbonate (PC), polymethyl methacrylate (PMMA), a mixture of polycarbonate and polyethylene terephthalate (PC+PET), polyamide (PA), acrylonitrile-butadiene-styrene plastics (ABS) and Polyurethane(PU); preferably polymethyl methacrylate (PMMA) or polycarbonate (PC). The thermoplastic resin also can be added with glass fibers. The thickness of the first plastic substrate 10 is about 0.6 mm to about 1 mm.

The adhesive layer 30 is a colorless transparent layer. The adhesive layer 30 is formed on the first plastic substrate 10 by spraying. The adhesive layer 30 mainly comprises of amino silane coupling agent. In this embodiment, the amino silane coupling agent mainly comprises of 3-aminopropyltriethoxysilane.

The second plastic substrate 50 can be transparent or translucent. The second plastic substrate 50 can be made of thermosetting resin material selected from a group consisting of epoxy resin, phenolic resin, thermosetting polyurethane and silicone resin. The thickness of the second plastic substrate 50 is about 0.6 mm to about 1.2 mm.

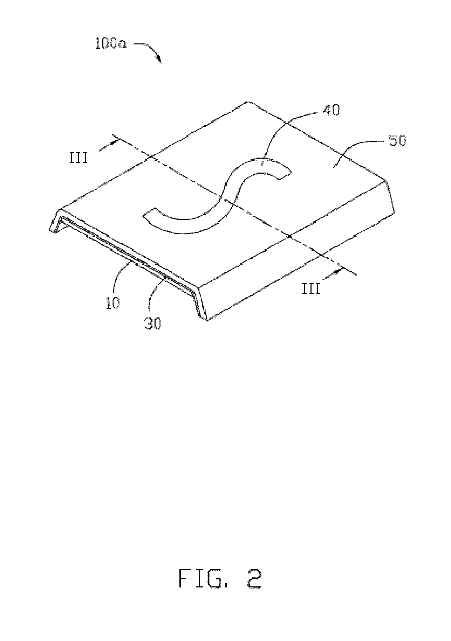

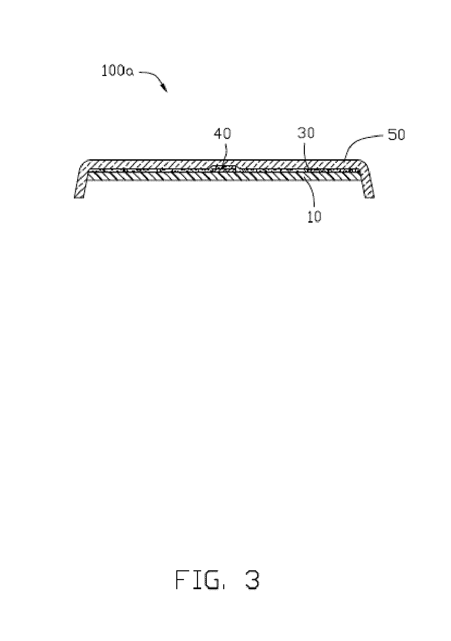

Referring to Fig. 2 and Fig. 3, a second exemplary embodiment of a plastic composite 100a further comprises a pattern layer 40 which is formed between the adhesive layer 30 and the first plastics substrate 10. The pattern layer 40 can be formed by spraying or printing. The pattern layer 40 also can be an insert such as film, sheet or laminate. The laminate can be made of metal, plastics or ceramic. The thickness of the laminate is about 0.4 mm to about 1 mm.

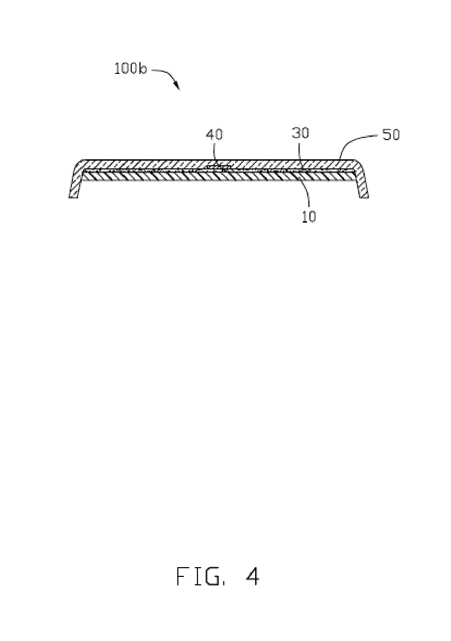

Referring to Fig. 4, a third exemplary embodiment of a plastic composite 100b further comprises a pattern 40 which is formed between the adhesive layer 30 and the second plastics substrate 50.

A method for manufacturing the plastic composite 100 may includes at least the following steps:

A first plastic substrate 10 is provided. The first plastic substrate 10 is formed by injection molding. The first plastic substrate 10 can be made of thermoplastic resin material selected from a group consisting of PC, PMMA, a PC+PET, PA, ABS and PU, preferably PMMA or PC. Glass fibers can be added to the thermoplastic resin. The thickness of the first substrate 10 is about 0.6 mm to about 1 mm.

An adhesive agent is provided. The adhesive agent mainly comprises amino silane coupling agent, ethanol, and deionized water. In this embodiment, the mass percentage of the amino silane coupling agent is about 2% - 5%, the mass percentage of the ethanol is about 3% - 5%, and the remainder is substantially deionized water. The amino silane coupling agent mainly comprises 3-aminopropyltriethoxysilane.

The adhesive agent formed by the following steps: about 2g - about 3g amino silane coupling agent, about 3 g - about 5 g ethanol and about 90 g - about 94 g deionized water is used as raw material; then thorough mixing and placed the raw material for about 30 min, and get the adhesive agent.

The adhesive agent is sprayed on the first plastic substrate 10 to form an adhesive layer 30. The adhesive layer 30 is formed by the following steps: spraying a mist-like layer of adhesive agent, and baking the first plastic substrate 10 at a temperature between about 30 °C - 50 °C for about 5 min to about 10 min, to form a colorless transparent adhesive layer 30 on the first substrate 10 .

A second plastics substrate 50 is formed on the adhesive layer 30. The adhesive layer 30 is formed by the following steps: providing a molding tool (not shown), the molding tool comprises an upper mold, a lower mold, and a core; the upper mold defines a molding cavity; positioning the first plastic substrate 10 with the adhesive layer 30 formed thereon, and closing the molding tool to form a molding chamber between the upper mold and the lower mold; introducing a melted thermosetting resin material into the molding chamber by an injection unit, the thermosetting resin can be selected from a group consisting of epoxy resin, phenolic resin, thermosetting polyurethane and silicone resin; further heat-curing the thermosetting resin at a temperature between about 60 °C to about 100 °C to form the second plastic substrate 50 on the adhesive layer 30. During the forming the second plastic substrate 20, the mold cavity is maintained at an atmospheric pressure.

In the second exemplary embodiment, the method for manufacturing the plastic composite 100a further comprises a step of position/forming a pattern 40 on the first substrate 10 before forming the adhesive layer 30.

In the third exemplary embodiment, the method for manufacturing the plastic composite 100b further comprises a step of position/forming a pattern 40 on the adhesive layer 30 before forming the second plastics substrate 50. And the pattern layer is covered by the second plastic substrate 50.

The pattern layer 30 can be formed by spraying or printing. The pattern layer 40 also can be an insert such as film, sheet or lamina. The laminate can be made of metal, plastics or ceramic. The thickness of the laminate is about 0.4mm to about 1 mm.

The present invention has the following advantages: First, the second plastic substrate 50 is formed at a lower pressure and lower molding temperature, which can reduce the scouring force that caused by the pressure changes within the molding tool, further reducing the internal stress between the first plastic substrate 10 and second plastic substrate 50 to prevent the pattern layer 40 damage. Second, the amino silane coupling agent mixed with the deionized water will cause hydrolysis of -Si(OH)₃; the -Si(OH)₃ may react with the active hydrogen atoms or the glass fiber to form -Si-O-Si- chemical bonds; and the -NH₂ of amino silane coupling agent will entwined with the chain molecules of thermosetting resin; thus can improve the bonding force between the first plastic substrate 10 and the second plastic substrate 50.

It is to be understood, however, that even through numerous characteristics and advantages of the exemplary disclosure have been set forth in the foregoing description, together with details of the system and function of the disclosure, the disclosure is illustrative only, and changes may be made in detail, especially in matters of shape, size, and arrangement of parts within the principles of the disclosure to the full extent indicated by the broad general meaning of the terms in which the appended claims are expressed.

## Claims

1. A plastic composite, comprising:
a first plastic substrate, the first plastic substrate being made of thermoplastic resin material;
an adhesive layer formed on the first plastic substrate the adhesive layer mainly comprising an amino silane coupling agent; and
a second plastic substrate formed on the adhesive layer, the second plastic substrate being made of thermosetting resin material..

2. The plastic composite as claimed in claim 1, wherein the amino silane coupling agent mainly comprises 3-aminopropyltriethoxysilane.

3. The plastic composite as claimed in claim 1, wherein the first plastic substrate is made of thermoplastic resin material selected from a group consisting of polycarbonate, polymethyl methacrylate, a mixture of polycarbonate and polyethylene terephthalate, polyamide, acrylonitrile-butadiene-styrene plastics and polyurethane.

4. The plastic composite as claimed in claim 1, wherein the thermoplastic resin is added with glass fibers.

5. The plastic composite as claimed in claim 1, wherein the second plastic substrate is made of thermosetting resin material selected from a group consisting of epoxy resin, phenolic resin, thermosetting polyurethane and silicone resin.

6. The plastic composite as claimed in claim 1, wherein the thickness of the first plastic substrate is about 0.6 mm to about 1 mm.

7. The plastic composite as claimed in claim 1, wherein the thickness of the second plastic substrate is about 0.6 mm to about 1.2 mm.

8. The plastic composite as claimed in claim 1, wherein the second plastic substrate is transparent or translucent.

9. The plastic composite as claimed in claim 1, wherein the plastic composite further comprises a pattern layer which is formed between the adhesive layer and the first plastics substrate.

10. The plastic composite as claimed in claim 1, wherein the plastic composite further comprises a pattern layer formed between the adhesive layer and the second plastics substrate.

11. The plastic composite as claimed in claim 9, wherein the pattern layer is formed by spraying or printing.

12. The plastic composite as claimed in claim 9, wherein the pattern layer is an insert such as film, sheet or laminate.

13. The plastic composite as claimed in claim 13, wherein the thickness of the laminate is about 0.4mm to about 1 mm.

14. A method for manufacturing the plastic composite comprising:
providing a first plastic substrate, the first plastic substrate being made of thermoplastic resin material;
providing an adhesive agent, the adhesive agent mainly comprising amino silane coupling agent and deionized water;
spraying the adhesive agent on the first plastic substrate and baking the adhesive agent to form an adhesive layer on the first plastic substrate;
forming a second plastic substrate on the adhesive layer at an atmospheric pressure by injection molding, the second plastic substrate being made of thermosetting resin material.

15. The method of claim 14, wherein the second plastic substrate is formed at a temperature between about 60 °C to about 100 °C.
